# EUROPEAN PATENT SPECIFICATION

(11) **EP 1 388 790 B1**
(45) Date of publication and mention of the grant of the patent: **20.07.2005**
(21) Application number: 02425517.6
(22) Date of filing: 07.08.2002
(51) Int. Cl.: G06F 13/38

(54) **Serial peripheral interface and relative method of managing it**
Serielle Peripherieschnittstelle und Verwaltungsverfahren dafür
Interface périphérique sérielle et procédé pour sa gestion

(43) Date of publication of application: 11.02.2004
(73) Proprietor: STMicroelectronics S.r.l., 20041 Agrate Brianza (Milano) (IT)
(72) Inventor: Pezzini, Saverio, 20059, Vimercate (IT)
(74) Representative: Pellegri, Alberto

(56) References cited:
- US-A- 4 958 277
- US-A- 6 108 719

## Description

### FIELD OF THE INVENTION

The present invention relates in general to serial interfaces for data communications among a control unit and external peripherals and more in particular to an SPI interface and a relative method of managing it.

### BACKGROUND OF THE INVENTION

Serial interfaces for data communications among a control unit and peripherals are largely used devices. Serial interfaces or briefly SPI (Serial Peripheral Interface) are commonly associated to microprocessors and peripherals.

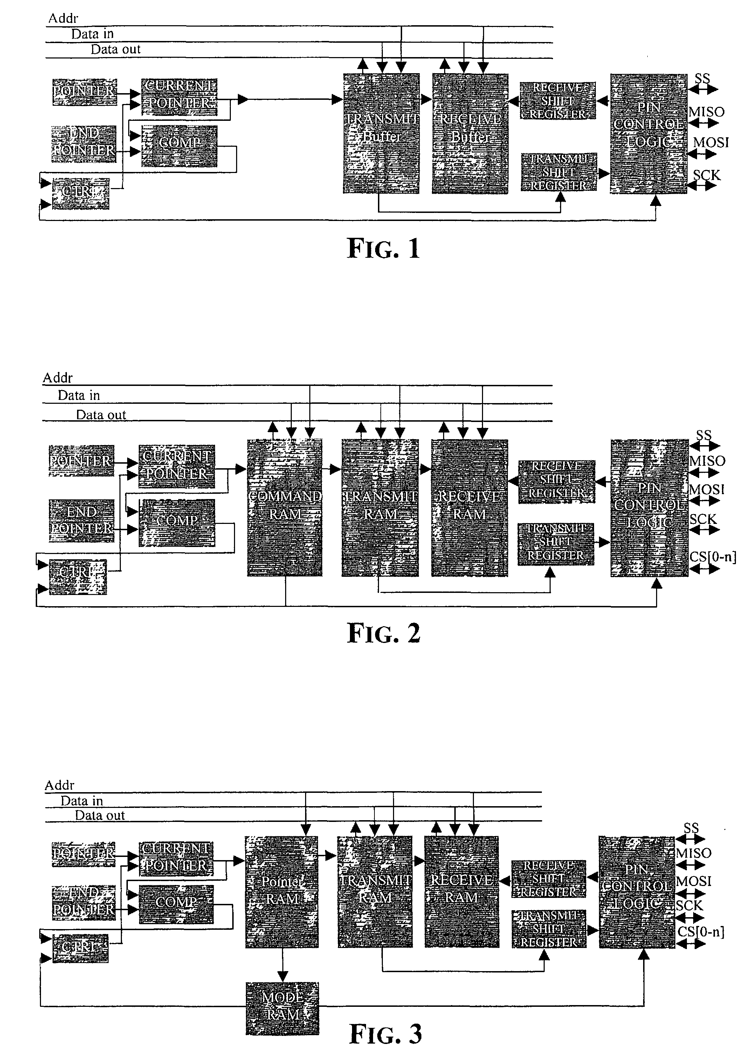

A typical block diagram of a SPI interface is depicted in Figure 1.

A control circuit PIN_CONTROL_LOGIC has a pin SCK for either receiving or outputting a clock signal depending on whether the SPI is either in a slave or in a master device, respectively, and a pair of input/output pins MISO (Master In/Slave Out) and MOSI (Master Out/Slave In) and another pin SS operating as "Slave Select", for configuring from outside the SPI interface as a slave device, or for selecting an external peripheral. If the interface is in a master device, then the pin MISO is the input of signals coming from the slave device and the pins MOSI and SS are output pins of signals for the slave device, while the opposite happens when the SPI interface is in a slave device.

A pair of FIFO memory buffers, TRANSMIT_BUFFER and RECEIVE_BUFFER, in which storing data to be transmitted and the data received, are connected to a bus DATA_IN for data to be transmitted to the peripherals, addresses ADDR of memory locations in which data in transit are stored, and data received from the connected peripherals DATA_OUT. Shift registers, RECEIVE SHIFT REGISTER and TRANSMIT SHIFT REGISTER, serially receive and transfer, respectively, to the circuit PIN CONTROL CIRCUIT received data or data to be transmitted.

The buffers are connected to circuit blocks: POINTER, CURRENT POINTER, that generate a pointer to the single bits of the memory location to be read. More precisely, the counter POINTER increments the current value of the pointer stored in the register CURRENT POINTER. The comparator COMP compares the current value of the pointer with a pre-established maximum value, generated by the block END POINTER, eventually signaling that all bits of the word have been read when the maximum value is reached.

The control register CTRL exchanges with the control circuit PIN CONTROL LOGIC information necessary for configuring the SPI interface. It may also load a certain default value in the circuit CURRENT POINTER.

Another kind of SPI interface is the so-called "Queued SPI" (QSPI), disclosed in US 4,816,996 and US 4,958,277 by S.C. Hill et al. and schematically depicted in Figure 2. It differs from the interface of Figure 1 because the data to be transmitted and received are not stored in a pair of FIFO buffers, but in a RAM memory together with commands to be executed.

Substantially, the RAM memory is used to store data in transit among interfaces and peripherals and control commands that are necessary to specify the length and destination of data together with other parameters associated with each transfer. The control circuit has "Chip Select" pins CS[0-n] for selecting a peripheral to communicate with when the interface is in a master device; while the pins CS are not used when the interface is in a slave device. The information necessary for determining the desired "Chip Select" value on the relative pin is provided to the control circuit by the RAM memory.

The RAM memory is organized in three memory sections RECEIVE RAM, TRANSMIT RAM and COMMAND RAM containing respectively received data, data to be transmitted and commands for configuring the interface in the desired mode. The pointer provided to the block CURRENT POINTER is used for pointing at the same time a certain word in the memory section RECEIVE RAM, a certain word in the memory section TRANSMIT RAM and a byte in the memory section COMMAND RAM identified by the address specified on the bus ADDR. The configuration commands to be executed are provided to the interface by an external controller each time that a datum passes through the interface.

This architecture is more advantageous of that of Figure 1 because each time data to be transmitted and a configuration command have been written in the RAM memory, the interface may execute the programmed transfers simply by incrementing the pointer generated by the CURRENT POINTER without the intervention of an external controller. Moreover, when the datum to be transmitted has been written in the memory, it may be retransmitted again many times to different peripherals without any further write operations in the memory, simply by changing the bits of the configuration command that identify the different destinations.

However, QSPI interfaces require the writing by an external controller of a command in the memory section COMMAND of the RAM memory each time a datum is exchanged transmitted to or received from a peripheral. This represents a drawback because of the burden placed on the external controller, the architecture of which needs to be burdened with specific circuitry.

### OBJECT AND SUMMARY OF THE INVENTION

It has been found and is the object of this invention a serial interface for communicating with peripherals that does not require an external controller to provide commands at each data exchange with the connected peripherals.

Substantially the interface of this invention comprises a RAM memory coupled to at least an external data bus for transferring data to be transmitted or received from a peripheral and to an external address bus on which receiving addresses at which to store data to be transmitted or received, having
- a memory section for storing data to be transmitted,
- a memory section for storing received data and
- a memory section for storing configuration commands of the interface.

Like a known Queued SPI interface, the interface of the invention further has circuit means for generating pointers to the single bits of words addressed in the memory sections, circuit means of serial transfer of data from or to at least a peripheral connectable to the interface, coupled to the memory and executing the configuration command pointed in the memory section for storing commands, and a relative control register coupled to the memory and to the circuit means of serial transfer, controlling the transfer of data to be transmitted or received.

Differently from Queued SPI interfaces, the interface of this invention does not require that an external controller provide configuration commands for each datum to be transmitted or received. According to this invention, the memory sections for storing data are divided in distinct memory spaces and each memory space is destined to store data pertaining to a respective peripheral connected to the interface, the memory section destined to store commands contains all the configuration commands of the interface for communicating with peripherals connected to it and the interface comprises further an additional circuit for generating addresses to the memory section storing the configuration commands. This circuit is input with addresses provided on the external address bus and generates, in function of them, corresponding addresses at which the appropriate configuration commands to be executed are stored.

A further object of the invention is a method of managing a serial peripheral interface of the invention, comprising
- initializing the interface by loading in the memory section dedicated to store commands all the configuration commands of the interface for communicating with the peripherals connected to it;
- associating to each connected peripheral, respective memory spaces of the memory sections for storing data in which to store data in transit from or to it;
- for each address on the address bus, generating corresponding addresses of the memory section containing the configuration commands;
- for transmitting a datum to a certain peripheral, sending on the address bus an address of the memory section for storing data to be transmitted associated to the peripheral, and configuring the interface according to the commands stored in the corresponding addresses of the memory section containing the configuration commands;
- for receiving a datum from a certain peripheral, sending on the address bus an address of the memory section for storing received data associated to the peripheral, and configuring the interface according to the commands stored at the corresponding addresses of the memory section containing the configuration commands.

In practice, data conveyed through the interface are written at different addresses depending on the peripheral to which they pertain. Therefore, it is sufficient to specify the memory address at which the datum to be transmitted is stored or at which to store a received datum, for identifying the peripheral to which the datum belongs and therefore the appropriate configuration commands of the interface to be executed, because the configuration memory has been preliminarily written with all the configuration commands that may be used for communicating with the connected peripherals.

In this way, the external controller is no longer engaged in any interface configuration task during data exchanges.

The invention is more precisely defined in the annexed claims.

### BRIEF DESCRIPTION OF THE DRAWINGS

The different aspects and advantages of the invention will appear even more evident through a detailed description referring to the attached drawings in which:
**Figure 1** is a block diagram of the architecture of a known SPI interface;
**Figure 2** shows the architecture of a known Queued SPI interface;
**Figure 3** is a block diagram of the interface of this invention having a memory section containing all the configuration commands of the interface for all the connected peripherals.

### DESCRIPTION OF AN EMBODIMENT OF THE INVENTION

A block diagram of the SPI interface of the invention is depicted in Figure 3.

As it may be observed, its general architecture is similar to that of a Queued SPI, however instead of the block COMMAND RAM there is a configuration memory, MODE RAM, and a generator of pointers to it, POINTER RAM. The size of the configuration memory is determined by the number of commands that may be necessary to execute and thus by the number of external peripherals that may be coupled through the interface, each selected by activating a respective "Chip Select" CS[0-n].

The interface of this invention is managed according to a method that contemplates an initialization phase in which the memory MODE RAM is programmed with all the required configuration commands. This need to be done because the peripherals connected to the device that contains the interface are recognized only after initialization of the interface.

Thereafter, distinct memory spaces of the memory sections dedicated to store data to be transmitted, TRANSMIT RAM, and data received RECEIVE RAM, are associated to each connected peripheral. This arrangement of the memory space allows to know, simply by specifying a certain address on the bus ADDR, whether either a datum to be transmitted or received must be stored and which is the involved peripheral.

For instance, let us suppose that the interface is in a master device and that a datum associated with the peripheral identified by the Chip Select "X" must be transmitted. In the case of a Queued SPI of the prior art, an external controller must provide respective configuration commands for any datum to be transmitted, while in the case of an SPI interface of this invention, it is sufficient to provide the datum and a relative address, ADDR, that will correspond to a certain address "X" of the memory section TRANSMIT RAM.

In fact, the address ADDR at which the datum must be stored, communicates to the interface also the fact that it is necessary to transmit a datum to the peripheral X beside specifying that the datum must be stored in the memory section TRANSMIT RAM at the address X. Moreover, the block POINTER RAM receives the address on the bus ADDR and derives from it the addresses of the memory MODE RAM in which the commands of configuration of the interface for transmitting the datum to the peripheral identified by the Chip Select "X" are stored.

If the interface of this invention is in a slave device, then the address on the bus ADDR pertains to the memory section RECEIVE RAM and will be associated to an address of the memory MODE RAM at which the appropriate configuration command to be executed in receiving mode is stored.

The interface of this invention allows to carry out data transmission and reception operations without requiring that an external controller send each time a appropriate configuration command to the interface. In this way, while preserving the possibility of varying the number and type of peripherals connected to the interface according to the user's needs, the structure of the external controller may be greatly simplified.

## Claims

1. A serial peripheral interface comprising
a RAM memory coupled to at least an external data bus (DATA IN, DATA OUT) for transferring data to be transmitted or received from a peripheral and an external address bus (ADDR) for receiving addresses at which to store data to be transmitted or received, having a memory section for storing data to be transmitted a memory section for storing received data and a memory section for storing configuration commands of the interface
circuit means for generating pointers (POINTER, CURRENT POINTER, END POINTER, COMP) to the single bits of an addressed memory location of said memory sections,
circuit means for serial transfer of data from or to at least a peripheral connected to the interface, coupled to said memory and for executing a certain configuration command,
a control register (CTRL) coupled to said memory and to said circuit means for serial transfer, controlling the data transfer to be transmitted or received,
**characterized in that**
said memory sections for storing data are divided in distinct memory spaces and each memory space is destined to store data pertaining to a respective peripheral connected to the interface;
said memory section for storing configuration commands contains all the configuration commands of the interface for communicating with all the peripherals connected to it;
said interface further comprises a circuit for generating addresses to said memory section containing all the configuration commands, which in use is input with addresses provided on said external address bus (ADDR), the addresses each identifying a specific memory section for storing data to be transmitted or received, and which generates in function of the address on the external address bus, a corresponding address in which the relative configuration command to be executed is stored.

2. The interface of claim 1, wherein said memory section for storing configuration commands of the interface is a second RAM memory distinct from said first memory.

3. A serial communication device, comprising
a serial peripheral interface, that may be coupled to at least a peripheral with which to communicate, having at least a memory for storing data conveyed through it,
at least an internal data bus (DATA IN, DATA OUT) for transferring data from or to the interface and an address bus (ADDR) for said memory in which said data in transit must be stored,
a microprocessor unit coupled to said data bus (DATA IN, DATA OUT) and to said address bus (ADDR),
**characterized in that**
said interface is the serial peripheral interface of one of claims 1 and 2.

4. Method of managing a serial peripheral interface as defined in one of claims 1 and 2, comprising the following operations:
initializing the interface by loading in said memory section for storing commands all the configuration commands of the interface for communicating with all the peripherals connected to it;
associating to each connected peripheral a respective memory space in both said memory sections for storing data ;
for each address on said address bus (ADDR), generating a corresponding address of the memory section containing the configuration commands ;
for transmitting a datum to a certain peripheral, sending on said address bus (ADDR) an address (X) of the memory section for storing data to be transmitted associated to said peripheral, and configuring the interface according to the command stored at said generated corresponding address of the memory section containing the configuration commands;
for receiving a datum from a certain peripheral, sending on said address bus (ADDR) an address (Y) of the memory section for storing received data associated to said peripheral, and configuring the interface according to the command stored at said generated corresponding address of the memory section containing the configuration commands.

## Patentansprüche

1. Serielle Peripherieschnittstelle, die aufweist:
einen RAM-Speicher, der mit mindestens einem externen Datenbus (DATA IN, DATA OUT) zur Übertragung von Daten, die zu einem Peripheriegerät übertragen oder von ihm empfangen werden sollen, und einem externen Adreßbus (ADDR) zum Empfangen von Adressen gekoppelt ist, an denen Daten gespeichert werden sollen, die übertragen oder empfangen werden sollen, der einen Speicherabschnitt zur Speicherung von Daten, die übertragen werden sollen, einen Speicherabschnitt zur Speicherung von empfangenen Daten und einen Speicherabschnitt zur Speicherung von Konfigurationsbefehlen der Schnittstelle aufweist,
Schaltungseinrichtungen zur Erzeugung von Zeigern (POINTER, CURRENT POINTER, END POINTER, COMP) auf die einzelnen Bits einer adressierten Speicherstelle der Speicherabschnitte,
Schaltungseinrichtungen zur seriellen Übertragung von Daten von oder zu mindestens einem Peripheriegerät, das an der Schnittstelle angeschlossen ist, die mit dem Speicher und zur Ausführung eines bestimmten Konfigurationsbefehl gekoppelt ist,
ein Steuerregister (CTRL), das mit dem Speicher und den Schaltungseinrichtungen zur seriellen Übertragung gekoppelt ist, das die Datenübertragung steuert, die übertragen oder empfangen werden soll,
**dadurch gekennzeichnet, daß**
die Speicherabschnitte zur Speicherung von Daten in unterschiedliche Speicherplätze unterteilt sind und jeder Speicherplatz dazu bestimmt ist, Daten zu speichern, die ein jeweiliges Peripheriegerät betreffen, das an der Schnittstelle angeschlossen ist;
wobei der Speicherabschnitt zur Speicherung von Konfigurationsbefehlen alle Konfigurationsbefehle der Schnittstelle zur Kommunikation mit allen Peripheriegeräten enthält, die an sie angeschlossen sind;
und die Schnittstelle ferner eine Schaltung zur Erzeugung von Adressen für den Speicherabschnitt aufweist, der alle Konfigurationsbefehle enthält, die im Gebrauch mit Adressen versorgt wird, die auf dem externen Adreßbus (ADDR) bereitgestellt werden, wobei die Adressen jeweils einen spezifischen Speicherabschnitt zur Speicherung von Daten identifizieren, die übertragen oder empfangen werden sollen, und die als Funktion der Adresse auf dem externen Adreßbus eine entsprechende Adresse erzeugt, in der der relative Konfigurationsbefehl, der ausgeführt werden soll, gespeichert ist.

2. Schnittstelle nach Anspruch 1, wobei der Speicherabschnitt zur Speicherung von Konfigurationsbefehlen der Schnittstelle ein zweiter RAM-Speicher ist, der sich vom ersten Speicher unterscheidet.

3. Serielle Kommunikationsvorrichtung, die aufweist:
eine serielle Peripherieschnittstelle, die mit mindestens einem Peripheriegerät gekoppelt werden kann, mit dem kommuniziert werden soll, die mindestens einen Speicher zur Speicherung von Daten aufweist, die durch sie übermittelt werden,
mindestens einen internen Datenbus (DATA IN, DATA OUT) zur Übertragung von Daten von oder zu der Schnittstelle und einen Adreßbus (ADDR) für den Speicher, in dem die Durchgangsdaten gespeichert werden müssen,
eine Mikroprozessoreinheit, die mit dem Datenbus (DATA IN, DATA OUT) und mit dem Adreßbus (ADDR) gekoppelt ist,
**dadurch gekennzeichnet, daß**
die Schnittstelle die serielle Peripherieschnittstelle eines der Ansprüche 1 und 2 ist.

4. Verfahren zur Verwaltung einer seriellen Peripherieschnittstelle nach einem der Ansprüche 1 und 2, das die folgenden Operationen aufweist:
Initialisieren der Schnittstelle durch Laden in den Speicherabschnitt zum Speichern von Befehlen aller Konfigurationsbefehle der Schnittstelle zur Kommunikation mit allen Peripheriegeräten, die an sie angeschlossen sind;
Zuordnen zu jedem angeschlossenen Peripheriegerät eines jeweiligen Speicherplatzes in beiden Speicherabschnitten zur Speicherung von Daten;
für jede Adresse auf dem Adreßbus (ADDR), Erzeugen einer entsprechenden Adresse des Speicherabschnitts, der die Konfigurationsbefehle enthält;
zum Übertragen eines Datenwerts zu einem bestimmten Peripheriegerät, Senden auf dem Adreßbus (ADDR) einer Adresse (X) des Speicherabschnitts zur Speicherung von zu übertragenden Daten, der dem Peripheriegerät zugeordnet ist, und Konfigurieren der Schnittstelle gemäß des Befehls, der an der erzeugten entsprechenden Adresse des Speicherabschnitts gespeichert ist, der die Konfigurationsbefehle enthält;
zum Empfangen eines Datenwerts von einem bestimmten Peripheriegerät, Senden auf dem Adreßbus (ADDR) einer Adresse (Y) des Speicherabschnitts zur Speicherung empfangener Daten, der dem Peripheriegerät zugeordnet sind, und Konfigurieren der Schnittstelle gemäß des Befehls, der an der erzeugten entsprechenden Adresse des Speicherabschnitts gespeichert ist, der die Konfigurationsbefehle enthält.

## Revendications

1. Interface série de périphérique comprenant :
une mémoire RAM couplée à au moins un bus de données externe (DATA IN, DATA OUT) pour transférer des données à émettre ou à recevoir à partir d'un périphérique et un bus d'adresses externe (ADDR) pour recevoir des adresses auxquelles mémoriser des données à émettre ou à recevoir, comportant une partie de mémoire de mémorisation de données à émettre, une partie de mémoire de mémorisation de données reçues, et une partie de mémoire de mémorisation d'ordres de configuration de l'interface ;
un moyen de circuit pour générer des pointeurs (POINTER, CURRENT POINTER, END POINTER, COMP) aux bits uniques d'un emplacement de mémoire adressé des parties de mémoire ;
un moyen de circuit pour transférer en série les données à partir ou en direction d'au moins un périphérique connecté à l'interface, couplé à la mémoire, et pour exécuter un certain ordre de configuration ;
un registre de commande (CTRL) couplé à la mémoire et au moyen de circuit de transfert série, commandant le transfert de données à émettre ou à recevoir ;
**caractérisée en ce que** :
les parties de mémoire de mémorisation de données sont divisées en espaces mémoire distincts et chaque espace mémoire est destiné à mémoriser des données appartenant à un périphérique respectif connecté à l'interface ;
la partie de mémoire de mémorisation d'ordres de configuration contient tous les ordres de configuration de l'interface pour communiquer avec tous les périphériques qui lui sont connectés ;
l'interface comprend en outre un circuit pour produire des adresses vers la partie de mémoire contenant tous les ordres de configuration, qui, en utilisation, reçoit des adresses fournies sur le bus d'adresse externe (ADDR), chaque adresse identifiant une partie de mémoire spécifique pour mémoriser des données à transmettre ou recevoir et qui produit, en fonction de l'adresse sur le bus d'adresse externe, une adresse correspondante dans laquelle l'ordre de configuration à exécuter est mémorisé.

2. Interface selon la revendication 1, dans laquelle la partie de mémoire de mémorisation d'ordres de configuration de l'interface est une seconde mémoire RAM distincte de la première mémoire.

3. Dispositif de communication série comprenant :
une interface de périphérique série qui peut être couplée à au moins un périphérique avec lequel communiquer, comportant au moins une mémoire pour mémoriser des données qui lui sont envoyées,
au moins un bus de données internes (DATA IN, DATA OUT) pour transférer des données à partir ou en direction de l'interface et un bus d'adresse (ADDR) pour la mémoire dans laquelle les données en transit doivent être mémorisées,
un module de microprocesseur couplé au bus de données (DATA IN, DATA OUT) et au bus d'adresse (ADDR),
**caractérisé en ce que** l'interface est l'interface série de périphérique de l'une des revendications 1 et 2.

4. Procédé de gestion d'une interface série de périphérique telle que définie dans l'une des revendications 1 et 2, comprenant les opérations suivantes :
initialiser l'interface en chargeant dans la partie de mémoire de mémorisation d'ordres tous les ordres de configuration de l'interface pour communiquer avec tous les périphériques qui lui sont connectés ;
associer à chaque périphérique connecté un espace mémoire respectif dans les deux parties de mémoire de mémorisation de données :
pour chaque adresse sur le bus d'adresse (ADDR), produire une adresse correspondante de la partie mémoire contenant les ordres de configuration ;
pour transmettre une donnée à un certain périphérique, envoyer sur le bus d'adresse (ADDR) une adresse (X) de la partie de mémoire de mémorisation de données à émettre associée au périphérique, et configurer l'interface selon l'ordre mémorisé à l'adresse correspondante produite de la partie de mémoire contenant les ordres de configuration ;
pour recevoir une donnée d'un certain périphérique, envoyer sur le bus d'adresse (ADDR) une adresse (Y) de la partie de mémoire de mémorisation de données reçues associée au périphérique, et configurer l'interface selon l'ordre mémorisé à l'adresse correspondante produite de la partie de mémoire contenant les ordres de configuration.
